# EUROPÄISCHE PATENTSCHRIFT

(11) **EP 1 698 530 B1**
(45) Veröffentlichungstag und Bekanntmachung des Hinweises auf die Patenterteilung: **05.10.2011**
(21) Anmeldenummer: 05004552.5
(22) Anmeldetag: 02.03.2005
(51) Int. Cl.: B60R 25/02

(54) **Verriegelungsvorrichtung für eine Lenkspindel und anwendungsspezifische integrierte Schaltung hierfür**
Locking device for a steering shaft and application specific integrated circuit for it
Dispositif de verrouillage de colone de direction et un circuit intégré specifique pour pour cela

(43) Veröffentlichungstag der Anmeldung: 06.09.2006
(73) Patentinhaber: Huf Hülsbeck & Fürst GmbH & Co. KG, 42551 Velbert (DE)
(72) Erfinder: Müller, Ulrich, 42549 Velbert (DE); Zech, Michael, 42553 Velbert (DE); Finzel, Jörg, 40699 Erkrath (DE); Felgl, Andreas, 93077 Bad Abbach (DE); Greiff, Stephan, 93356 Teugn (DE); Kienlein, Reinhold, 92318 Pölling (DE); Müller, Norbert, 93170 Bernhardswald (DE)
(74) Vertreter: Zenz

(56) Entgegenhaltungen:
- WO-A-03/071073
- DE-A1- 19 929 435
- DE-C1- 19 809 295
- US-A- 4 643 009

## Beschreibung

Die Erfindung betrifft eine Verriegelungsvorrichtung für eine Lenkspindel mit einer Sperrbolzenanordnung, einem Steuerglied und einer Sensoranordnung, wobei das Steuerglied über Führungseinrichtungen mit der Sperrbolzenanordnung derart gekoppelt ist, daß die Sperrbolzenanordnung bei Drehung des Steuerglieds zwischen einer Sperrstellung und einer Freigabestellung bewegbar ist, wobei die Sperrbolzenanordnung in der Sperrstellung eine Drehung der Lenkspindel blockiert, und wobei die Sensoranordnung zum Erfassen der Freigabestellung der Sperrbolzenanordnung und wenigstens einer vorgegebenen Drehstellung des Steuerglieds dient. Ferner betrifft die Erfindung eine anwendungsspezifische integrierte Schaltung (ASIC) zur Verwendung in einer solchen Verriegelungsvorrichtung.

Eine Verriegelungsvorrichtung der eingangs genannten Art ist beispielsweise aus der WO 2004/098960 A1 bekannt. Die bekannte Verriegelungsvorrichtung weist einen Sperrbolzen auf, der in einer radialen Richtung der Lenkspindel zwischen einer Freigabestellung und einer Sperrstellung hin- und herbewegbar ist. An seinem der Lenkspindel abgewandten Ende weist der Sperrbolzen einen seitlich abstehenden, zylindrischen Stift auf, der in einer Spiralnut einer drehbaren Steuerscheibe geführt ist, wobei die Steuerscheibe seitlich unmittelbar neben dem Sperrbolzen angeordnet ist. Die Steuerscheibe ist um eine rechtwinklig zur Bewegungsrichtung des Sperrbolzens orientierte Achse drehbar. Der Sperrbolzen weist ferner einen seitlichen Vorsprung auf, der einen ersten elektrischen Schalter betätigt, wenn der Sperrbolzen seine Freigabestellung einnimmt. Die Vorrichtung weist ferner einen zweiten elektrischen Schalter auf, der von einem federbelasteten Schwenkhebel betätigt wird, wobei der Schwenkhebel in Abhängigkeit von der Drehstellung der Steuerscheibe ausgelenkt wird. Bei einer vorgegebenen Drehstellung der Steuerscheibe, die sowohl der Sperrstellung des Sperrbolzens als auch der Freigabestellung entspricht, wird der zweite Schalter betätigt. Die Kombination der beiden Schalter ermöglicht eine sichere Erfassung der Freigabestellung, in welcher beide Schalter betätigt werden. Nachteilig bei der bekannten Anordnung ist die relativ große Bauhöhe, die sich einerseits aus der Anordnung der Steuerscheibe und andererseits aus den räumlichen Anordnungen der beiden Schalter ergibt. Ein weiterer Nachteil ist der relativ komplizierte Aufbau aufgrund des Hebelmechanismus.

Die DE 19809295 offenbart eine Verriegelungsvorrichtung mit einem Sperriegel, die zwei berührungslos arbeitende Sensoren verwendet, um die Lage des Sperriergels zu überwachen. Der erste Sensor detektiert die Lage eines Sicherungselementes und der zweite Sensor ist dem Riegel direkt zugeordnet.

Aus der Patentschrift DE 100 30 688 C1 ist eine andere Verriegelungsvorrichtung für eine Lenkspindel bekannt, bei der eine Sperrbolzenanordnung einen in Nuten der Lenkspindel eingreifenden Sperrbolzen und ein Betätigungsglied (Hubbolzen) umfaßt, wobei der Sperrbolzen federnd in dem Hubbolzen geführt ist, was ein Nachfedern des Sperrbolzens beim Einrasten in die Nuten der Lenkspindel für den Fall gestattet, daß der Sperrbolzen beim Verriegeln auf einen Vorsprung zwischen zwei Nuten der Lenkspindel zufährt und dadurch nicht seine Endposition in einer Nut erreichen kann. Die Sperrbolzenanordnung ist durch eine Ausnehmung des Steuerglieds derart hindurchgeführt, daß sich das Steuerglied um die Sperrbolzenanordnung dreht, wobei mit der Sperrbolzenanordnung verbundene Vorsprünge in eine Innenschnecke des hülsenförmigen Steuerglieds eingreifen.

Eine ähnliche Anordnung von Sperrbolzen und Steuerglied ist auch aus der Patentschrift DE 101 09 609 C1 bekannt. Dieser Patentschrift ist ferner zu entnehmen, daß der Sperrbolzen beim Erreichen seiner Entriegelungsstellung (Freigabestellung) einen Endschalter (zum Beispiel einen Mikrotaster) betätigt. Einen Sensor zum Erfassen der Drehstellung des Steuerglieds offenbaren die beiden letztgenannten Druckschriften jedoch nicht.

Aufgabe der Erfindung ist es, die Herstellung einer Verriegelungsvorrichtung geringer Baugröße bei geringen Kosten und sicherer Erfassung der Freigabestellung zu ermöglichen.

Diese Aufgabe wird erfindungsgemäß durch eine Verriegelungsvorrichtung für eine Lenkspindel mit den Merkmalen des Anspruchs 1 gelöst.

Die erfindungsgemäße Verriegelungsvorrichtung für eine Lenkspindel weist eine Sperrbolzenanordnung, ein Steuerglied und eine Sensoranordnung auf. Das Steuerglied ist über Führungseinrichtungen mit der Sperrbolzenanordnung derart gekoppelt, daß die Sperrbolzenanordnung bei Drehung des Steuerglieds zwischen einer Sperrstellung und einer Freigabestellung bewegbar ist, wobei die Sperrbolzenanordnung in der Sperrstellung eine Drehung der Lenkspindel blockiert. Die Sperrbolzenanordnung ist ferner derart durch eine Ausnehmung des Steuerglieds hindurchgeführt, daß das Steuerglied um die Sperrbolzenanordnung drehbar und die Sperrbolzenanordnung in axialer Richtung bewegbar ist. Die Sensoranordnung dient dem Erfassen der Freigabestellung der Sperrbolzenanordnung und wenigstens einer vorgegebenen Drehstellung des Steuerglieds und umfaßt einen ersten Permanentmagneten, der an der Sperrbolzenanordnung befestigt ist und sich bei Erreichen der Freigabestellung in einer ersten Kopplungsposition relativ zu einem ersten Hall-Sensor befindet, und einen zweiten Permanentmagneten, der mit dem Steuerglied derart gekoppelt ist, daß er bei Erreichen der vorgegebenen Drehstellung des Steuerglieds eine zweite Kopplungsposition relativ zu einem zweiten Hall-Sensor einnimmt, wobei die Anordnung der Permanentmagnete so gewählt ist, daß die beiden Kopplungspositionen im wesentlichen in einer Ebene derart liegen, daß die beiden Hall-Sensoren auf einer benachbart zu dieser Ebene angeordneten Schaltungsplatine montiert werden können. Hierbei bedeutet "im wesentlichen", daß die beiden Kopplungspositionen nicht mathematisch exakt in einer Ebene liegen müssen; es kann ein gewisser Versatz zwischen den beiden Kopplungspositionen vorhanden sein, der durch unterschiedliche Höhe der auf der Schaltungsplatine montierten Hall-Sensoren ausgeglichen werden kann. Der Versatz kann aber auch deshalb akzeptabel sein, weil die Stärke der Ankopplung des Magnetfelds der Permanentmagneten nicht gleich zu sein braucht. Die Größe des maximalen Versatzes zwischen den beiden Kopplungspositionen ergibt sich aus baulichen Toleranzen und der akzeptablen Differenz der Einbauhöhen der beiden Hall-Sensoren auf der Schaltungsplatine.

Der zweite Permanentmagnet ist an einer von der Lenkspindel abgewandten Stirnseite des Steuerglieds oder an einer von dem Steuerglied bei dessen Drehung betätigbaren Übersetzungseinrichtung befestigt. Diese Übersetzungseinrichtung kann beispielsweise ein durch eine Feder vorgespannter Hebel oder Schieber sein, der gegen eine Oberfläche des Steuerglieds gedrückt wird, die bei Drehung des Steuerglieds ihre Lage derart ändert, daß die Übersetzungseinrichtung ausgelenkt wird. Die sich bewegende Oberfläche des Steuerglieds kann beispielsweise ein Steuernocken des Steuerglieds sein.

Die Form und die räumliche Orientierung (Ausrichtung von Nordpol und Südpol) der Permanentmagnete richtet sich nach der gewünschten Empfindlichkeit und der gewünschten Art der Einwirkung auf die Hall-Sensoren. Vorzugsweise ist der erste Permanentmagnet an einer von der Lenkspindel abgewandten Stirnseite der Sperrbolzenanordnung so angeordnet, daß die Pole in axialer Richtung hintereinander liegen. Der zweite Permanentmagnet andererseits ist vorzugsweise so angeordnet, daß die beiden Pole in der zur Längsrichtung des Sperrbolzens oder axialen Richtung senkrechten Ebene vorzugsweise nebeneinander liegen. Während sich somit bei der bevorzugten Ausbildung der erste Permanentmagnet dem ersten Hall-Sensor in axialer Richtung annähert, wenn die Sperrbolzenanordnung die Freigabestellung erreicht, bewegt sich der zweite Permanentmagnet vorzugsweise innerhalb der zur axialen Richtung senkrechten Ebene von einer Ausgangsposition zu der zweiten Kopplungsposition in der Nähe des zweiten Hall-Sensors. Die Anordnung der Permanentmagneten derart, daß sich die beiden Kopplungspositionen im wesentlichen in einer zur axialen Richtung senkrechten Ebene befinden, gestattet in Verbindung mit der Verwendung von Hall-Sensoren eine geringe Baugröße der Sensoranordnung, insbesondere eine Anordnung mehrerer oder auch lediglich einer integrierten Schaltung auf einer Leiterplatte. Vorzugsweise besitzen die beiden Kopplungspositionen einen geringen Abstand innerhalb der Ebene, so daß der Abstand der beiden Hall-Sensoren derart gering sein kann, daß sie in ein gemeinsames Gehäuse einer integrierten Schaltung aufgenommen werden können.

Bei einer bevorzugten Ausführungsform ist die vorgegebene Drehstellung des Steuerglieds, bei deren Erreichen der zweite Permanentmagnet die zweite Kopplungsposition einnimmt, die der Freigabestellung entsprechende Drehstellung. Diese Drehstellung kann bei einer Ausführungsform gleichzeitig auch die der Sperrstellung entsprechende Drehstellung sein; bei diesem Beispiel führt das Steuerglied auf dem Wege zwischen der Freigabestellung und der Sperrstellung eine Umdrehung aus. Während der erste Permanentmagnet in Verbindung mit dem ersten Hall-Sensor lediglich eine Aussage über die Annäherung an die Freigabestellung aber nicht über das exakte Erreichen der Endposition gestattet und während der zweite Permanentmagnet in Verbindung mit dem zweiten Hall-Sensor keine eindeutige Aussage darüber gestattet, ob gerade die Freigabestellung oder die Sperrstellung erreicht ist, gewährleistet die Kopplung der Ausgabesignale des ersten und des zweiten Hall-Sensors eine exakte Aussage über das Erreichen der Freigabestellung: nur in dieser Stellung wirken beiden Permanentmagneten auf die zugehörigen Hall-Sensoren ein.

Es ist auch denkbar, daß weitere Permanentmagnete mit der Sperrbolzenanordnung und/oder dem Steuerglied gekoppelt sind, die auf dieselben und/oder weitere Hall-Sensoren einwirken. Dies kann die Erfassungsgenauigkeit für andere Stellungen erhöhen, führt allerdings zu höheren Kosten.

Bei einer bevorzugten Ausführungsform weist die Sperrbolzenanordnung einen in einem Hubbolzen gelagerten Sperrbolzen auf. Der Hubbolzen ist beispielsweise hülsenförmig und über Vorsprünge mit einer Innenschnecke des Steuerglieds gekoppelt, so daß er sich bei Drehung des Steuerglieds axial hin- und herbewegt. Der Sperrbolzen ist beispielsweise in einer axialen

Bohrung des Hubbolzens geführt und wird durch eine Feder derart vorgespannt, daß er axial in den Hubbolzen hineingedrückt werden kann, wie dies beispielsweise aus der oben genannten Patentschrift DE 100 30 688 C1 bekannt ist.

Die erfindungsgemäße anwendungsspezifische integrierte Schaltung (ASIC) zur Verwendung in einer Verriegelungsvorrichtung für eine Lenkspindel dient dem Erfassen sowohl einer Freigabestellung einer einen ersten Permanentmagneten aufweisenden Sperrbolzenanordnung als auch einer vorgegebenen Drehstellung eines mit einem zweiten Permanentmagneten gekoppelten Steuerglieds, welches über Führungseinrichtungen mit der Sperrbolzenanordnung derart gekoppelt ist, daß die Sperrbolzenanordnung bei Drehung des Steuerglieds in ihrer Längsrichtung zwischen der Freigabestellung und einer Sperrstellung bewegbar ist. Die integrierte Schaltung weist einen ersten und einen zweiten Hall-Sensor auf. Diese sind in einer Ebene angeordnet und so beabstandet und ausgerichtet, daß der erste bzw. der zweite Permanentmagnet in den jeweils zu erfassenden Stellungen auf den ersten bzw. zweiten Hall-Sensor einwirken können. Die Schaltung weist ferner eine anwendungsspezifisch Logikschaltung auf, die die Ausgabesignale der beiden Hall-Sensoren auswertet. Vorzugsweise wertet die Logikschaltung die Ausgabesignale beider Hall-Sensoren derart aus, daß zumindest ein die Freigabestellung anzeigendes Ausgangssignal erzeugt wird.

Vorteilhafte und/oder bevorzugte Weiterbildungen der Erfindung sind in den Unteransprüchen gekennzeichnet.

Im folgenden wird die Erfindung anhand eines in der Zeichnung dargestellten bevorzugten Ausführungsbeispiels näher erläutert. In der Zeichnung zeigen:
Figur 1 eine Draufsicht auf eine erfindungsgemäße Verriegelungsvorrichtung, bei der der Gehäusedeckel und eine die Steuerschaltung tragende Schaltungsplatine entfernt sind;
Figur 2 eine Schnittansicht der in Figur 1 gezeigten Verriegelungsvorrichtung;
Figuren 3A - 3C Schnittansichten der auf eine Lenksäule aufgesetzten Verriegelungsvorrichtung in drei verschiedenen Betriebsstellungen, die eine Freigabestellung (Fig. 3A), eine Zwischenstellung (Fig. 3B) und eine Sperrstellung (Fig. 3C) umfassen; und
Figur 4 eine schematische Perspektivansicht einiger Elemente der Verriegelungsvorrichtung und der Lenksäule zur Veranschaulichung des Zusammenwirkens.

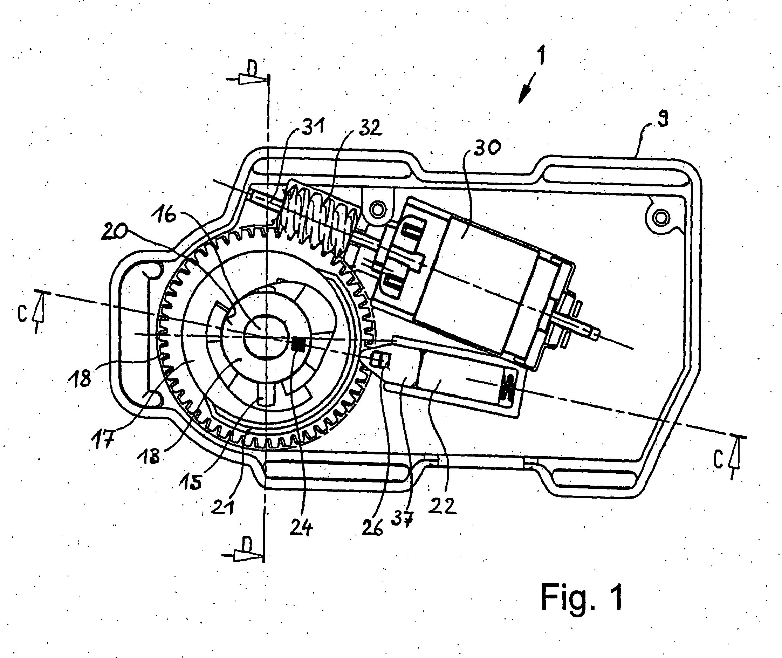

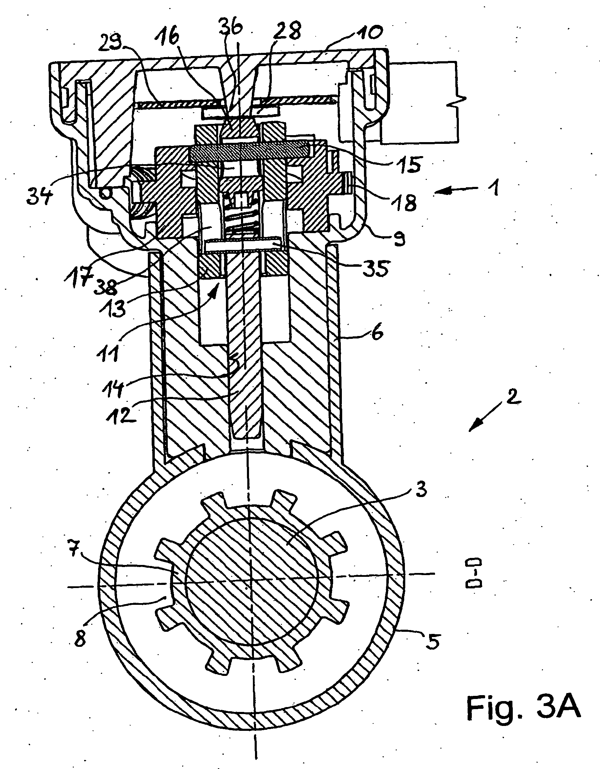

Die Figuren 1, 2 und 3A zeigen eine Verriegelungsvorrichtung 1 (auch Sperrschloß genannt), bei der sich ein Sperrbolzen 12 in einer Freigabestellung befindet, in der ein Drehen einer Lenkspindel 3 gestattet ist. Die Verriegelungsvorrichtung 1 enthält eine Sperrbolzenanordnung 11, die mit Hilfe eines Getriebes derart bewegt werden kann, daß ein Sperrbolzen 12 aus einem Gehäuse 9 der Verriegelungsvorrichtung 1 herausgeschoben bzw. in das Gehäuse zurückgezogen werden kann. Das Getriebe wird von einem Elektromotor 30 angetrieben, der wiederum von einer Steuerungseinrichtung betätigt wird. Die Steuerungseinrichtung ist beispielsweise auf einer Schaltungsplatine 29 angeordnet, die sich im Gehäuse 9 befindet.

Die Verriegelungsvorrichtung 1 wird mit einem passend ausgebildeten Abschnitt ihres Gehäuses 9 in eine entsprechende Aufnahme 6 einer Lenksäule 2 eingeschoben und befestigt. Die Aufnahme 6 ist an einem Mantelrohr 5 der Lenksäule 2 angeformt, wobei das Mantelrohr 5 eine Lenkspindel 3 konzentrisch umgibt. In dem Abschnitt, in dem die Aufnahme 6 an dem Mantelrohr 5 angeformt ist, ist auf der Lenkspindel 3 eine Sperrhülse 7 befestigt. Die Sperrhülse 7 weist mehrere gleichmäßig entlang ihres Umfangs verteilte, in axialer Richtung der Lenkspindel verlaufende Sperrnuten 8 auf, die breiter sind als der der Lenkspindel 3 zugewandte vordere Abschnitt des Sperrbolzens, so daß der Sperrbolzen 12 nach Heranführen an die Lenkspindel 3 in eine Sperrnut 8 einrasten kann. Das Einrasten des Sperrbolzens 12 in eine Sperrnut 8 blockiert ein Drehen der Lenkspindel 3.

Die Sperrbolzenanordnung 11 ist an ihrem von der Lenkspindel 3 abgewandten Endabschnitt durch eine Ausnehmung 20 (Bohrung) eines diesen Abschnitt der Sperrbolzenanordnung 11 umgebenden Steuerglieds 17 geführt. Das Steuerglied 17 ist drehbar in dem Gehäuse 9 der verriegelungsvorrichtung 1 derart gelagert, daß es sich im wesentlichen konzentrisch um die Sperrbolzenanordnung 11 drehen kann. Das Steuerglied 17 weist eine Außenverzahnung 18 auf, in die eine Antriebsschnecke 32 eingreift. Die Antriebsschnecke 32 ist auf einer mit dem Elektromotor 30 verbundenen Antriebswelle 31 befestigt. Der Elektromotor 30 wird so angesteuert, daß er sich in beide Richtungen drehen kann, was zu entsprechenden Drehbewegungen des Steuerglieds 17 führt.

In der der Sperrbolzenanordnung 11 zugewandten Innenwandung der Ausnehmung 20 des Steuerglieds 17 sind zwei eine Hubkurve bildende Nuten 19 ausgebildet, wobei in jeweils einander gegenüberliegende Abschnitte der beiden Nuten 19 jeweils ein Ende eines quer durch die Sperrbolzenanordnung 11 geführten Querstiftes 15 eingreift. Die Sperrbolzenanordnung 11 ist verdrehsicher in einem Führungskanal 14 des Gehäuses 9 der Verriegelungsvorrichtung 1 geführt, so daß auch die Enden des Querstifts 15 verdrehsicher in den Führungsnuten 19 des Steuerglieds 17 geführt sind. Die Führungsnuten sind so ausgebildet, daß ein Drehen des Steuerglieds 17 um die Achse der Sperrbolzenanordnung 11 herum aufgrund der axialen Festlegung des Steuerglieds 17 zu einem axialen Verschieben der Sperrbolzenanordnung 11 führt. Bei dem bevorzugten Ausführungsbeispiel sind die Führungsnuten 19 so ausgebildet, daß etwa eine Umdrehung des Steuerglieds 17 zu einer Bewegung der Sperrbolzenanordnung 11 aus der Freigabestellung in die Sperrstellung bzw. umgekehrt führt.

Die Sperrbolzenanordnung 11 umfaßt den eigentlichen Sperrbolzen 12 rechteckigen Querschnitts, der in dem Führungskanal 14 des Gehäuses 9 geführt ist, sowie einen Hubbolzen 13, der den Sperrbolzen 12 in einem der Lenkspindel 3 abgewandten Endabschnitt umgibt. Hierbei ist der Sperrbolzen 12 nicht vollständig durch den Hubbolzen 13 hindurchgeführt; vielmehr ist der der Lenkspindel abgewandte Endabschnitt des Sperrbolzens 12 in eine der Lenkspindel zugewandte Sackbohrung 23 des Hubbolzens 13 eingeführt und in dem sich daran anschließenden Abschnitt des Hubbolzens 13 durch einen Stößel 16 ersetzt. Zwischen dem Stößel 16 und dem Sperrbolzen 12 ist eine Spiraldruckfeder 33 angeordnet, die den Stößel 16 und den Sperrbolzen 12 innerhalb der Ausnehmung des Hubbolzens 13 auseinanderdrückt. Der in den Führungsnuten 19 des Steuerglieds 17 geführte Querstift 15 ist in einer Querbohrung des Hubbolzens 13 befestigt und durch ein Langloch 34 des Stößels 16 hindurchgeführt. Ein weiterer Querstift 35 ist in einer Querbohrung des Sperrbolzens 12 befestigt und erstreckt sich mit seinen beiden Enden in zwei Langlöchern 38 des Hubbolzens. Diese Anordnung führt dazu, daß einerseits der Sperrbolzen 12 aufgrund des Spiels des Querstifts 35 in den Langlöchern 38 des Hubbolzens 13 relativ zu dem Hubbolzen bewegt werden kann, und andererseits dazu, daß der Stößel 16 relativ zu dem Hubbolzen 13 bewegt werden kann, soweit der Querstift 15 in seinem Langloch 34 bewegt werden kann. Wird der Hubbolzen 13 durch entsprechendes Drehen des Steuerglieds 17 von der Lenkspindel 3 wegbewegt, so daß der Sperrbolzen 12 die Freigabestellung erreicht, so wird der Stößel 16 gegen einen Gehäuseanschlag 36 bewegt, woraufhin - bei einem geringfügigen Weiterbewegen des Hubbolzens 13 - sich der Querstift 15 von der der Lenkspindel zugewandten Wandung des Langlochs 34 ablöst und in dem Langloch 34 ein Stück bewegt.

Der Querstift 35 des Sperrbolzens 12 liegt normalerweise auf der lenkspindelseitigen Wandung des im Hubbolzen 13 ausgebildeten Langlochs 38 an. Lediglich dann, wenn der Sperrbolzen 12 beim Annähern an seine Sperrstellung auf die Sperrhülse 7 auftrifft und sich der Hubbolzen 13 anschließend weiter in Richtung der Lenkspindel bewegt, wird der Querstift 35 von dieser Auflage abgehoben und wandert in dem Langloch 38, wobei sich die Spiraldruckfeder 33 zusammendrückt. Dies geschieht in geringem Maße beim Aufsetzen des Sperrbolzens 12 auf den Boden einer Sperrnut 8. Insbesondere geschieht dies aber dann, wenn der Sperrbolzen 12 nicht auf den Boden einer Sperrnut 8 sondern auf die dazwischen vorhandenen erhabenen Bereiche der Sperrhülse 7 aufsetzt. In diesem Fall kann der Sperrbolzen 12 bei anschließendem geringfügigen Drehen der Lenkspindel 3 in eine benachbarte Sperrnut 8 einrasten.

Der Aufbau und das Zusammenwirken der Sperrbolzenanordnung mit dem Steuerglied 17 und der Sperrhülse 7 der Lenkspindel sind detailliert in der anhängigen Patentanmeldung DE 10 2004 043 888 beschrieben. Die näheren Funktionen und Details sind aber für die vorliegende Erfindung von untergeordneter Bedeutung und sollen deshalb an dieser Stelle nicht näher beschrieben werden.

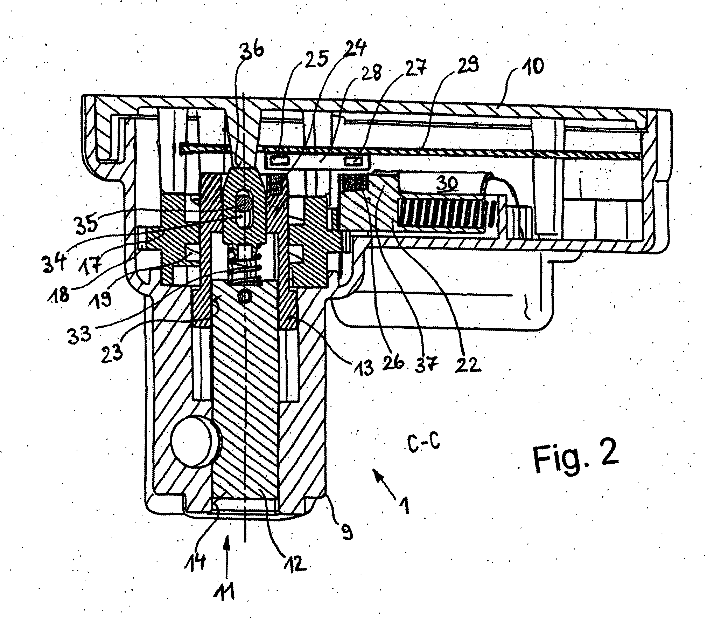

Zum sicheren Erfassen der verschiedenen Stellungen der Sperrbolzenanordnung 11 weist die Verriegelungsvorrichtung 1 eine Sensoranordnung auf, die sowohl die Freigabestellung der Sperrbolzenanordnung 11 als auch vorzugsweise diejenige Drehstellung des Steuerglieds 17 erfaßt, die der Freigabestellung (und auch der Sperrstellung) entspricht. Die Sensoranordnung umfaßt zwei Hall-Sensoren, die jeweils von Permanentmagneten betätigt werden. Wie in Fig. 2 zu erkennen ist, ist ein erster Permanentmagnet 24 in einer Ausnehmung an der der Lenkspindel abgewandten Stirnseite des Hubbolzens 13 befestigt. Der erste Permanentmagnet 24 bewegt sich zusammen mit dem Hubbolzen 13 in der axialen Richtung der Sperrbolzenanordnung 11 und erreicht somit in der Freigabestellung seine lenkspindelferne Endposition. Diese Endposition stellt eine Kopplungsposition zu einem ersten Hall-Sensor 25 dar. Der erste Hall-Sensor 25 ist so auf der Schaltungsplatine 29 angeordnet, daß der erste Permanentmagnet 24 bei Erreichen der Freigabestellung des Hubbolzens 13 einen minimalen Abstand zum ersten Hall-Sensor 25 erreicht. Die Anordnung und Stärke des Permanentmagneten 24 sowie die Anordnung und Empfindlichkeit des Hall-Sensors 25 sind dabei so gewählt, daß der Hall-Sensor in jedem Fall in der Freigabestellung des Hubbolzens 13 anspricht, nicht jedoch in der Sperrstellung. Bei welcher Zwischenstellung des Hubbolzens 13 der Hall-Sensor beginnt anzusprechen, braucht nicht exakt eingestellt zu werden und ist technologischen Toleranzen unterworfen.

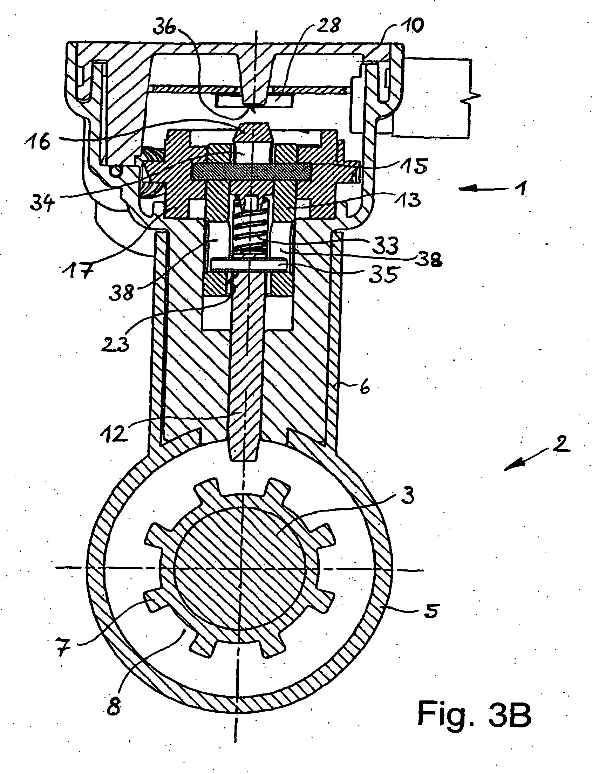

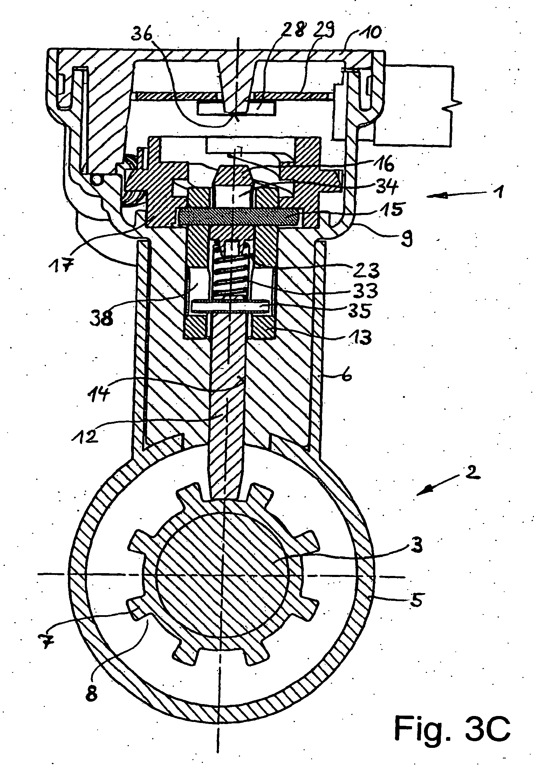

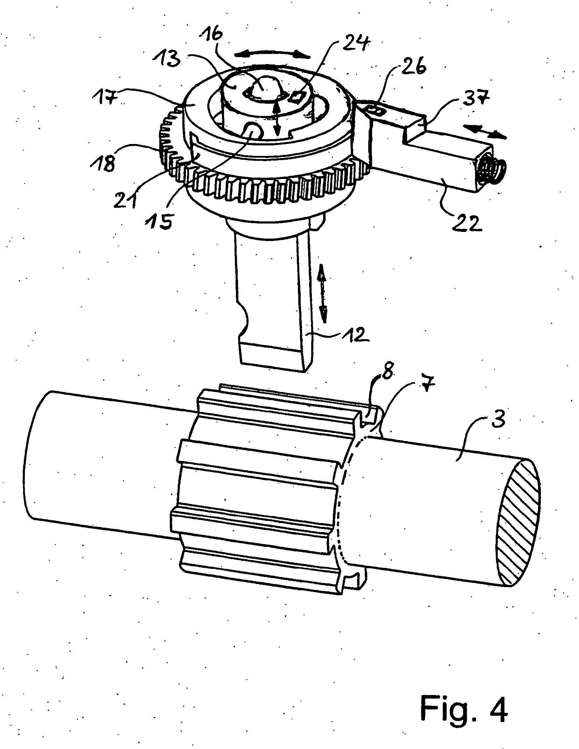

Zum Erfassen der Drehstellung des Steuerglieds 17 könnte ein zweiter Permanentmagnet direkt auf der lenkspindelfernen Stirnseite des Steuerglieds 17 angeordnet sein. Jedoch ist bei der bevorzugten Ausführungsform gemäß den Figuren 1 bis 4 das Steuerglied 17 an seiner der Lenkspindel abgewandten Stirnseite mit einem Steuernocken 21 versehen, der von einem federbelasteten Schieber 22 abgetastet wird. Bei Drehung des Steuerglieds 17 bewirkt der Steuernocken 21 ein Verschieben des Schiebers 22 in einer radialen Richtung des Steuerglieds 17. Auf einem Vorsprung 37 des Schiebers 22 ist ein zweiter Permanentmagnet 26 befestigt, wobei beispielsweise Nordpol und Südpol des zweiten Permanentmagneten 26 auf der Bewegungsachse des Schiebers 22 liegen. Der Vorsprung 37 und die Anordnung des zweiten Permanentmagneten 26 sind dabei so gewählt, daß sich die äußere Oberfläche des zweiten Permanentmagneten 26 näherungsweise in derselben Ebene befindet wie die stirnseitige Oberfläche des ersten Permanentmagneten 24 in der Freigabestellung des Hubbolzens 13. Benachbart zu dem zweiten Permanentmagneten 26 ist auf der Schaltungsplatine 29 ein zweiter Hall-Sensor 27 angeordnet. Wie es in Figur 2 angedeutet ist, können beide Hall-Sensoren 25 und 27 in ein gemeinsames Gehäuse einer anwendungsspezifischen integrierten Schaltung (ASIC; 28) aufgenommen sein. Die anwendungsspezifische integrierte Schaltung 28 enthält neben den beiden Hall-Sensoren 25 und 27 eine Schaltung, die die Ausgangssignale der Hall-Sensoren auswertet und Ausgabesignale erzeugt, die das Erreichen der Freigabestellung der Sperrbolzenanordnung 11 sowie ggf. weitere Stellungen kennzeichnen. Die anwendungsspezifische integrierte Schaltung kann darüber hinaus eine Schaltung zum Ansteuern des Elektromotors 30 oder zum Ansteuern einer Leistungstreiberschaltung für den Elektromotor 30 enthalten. Die anwendungsspezifische integrierte Schaltung kann Hall-Sensoren und Logikschaltungen auf einem Chip oder mehreren Chips verschiedener Technologien (z.B. CMOS, bipolar) enthalten. Die Verwendung der Hall-Sensoren, insbesondere in Verbindung mit der anwendungsspezifischen integrierten Schaltung, gestattet eine sehr geringe Bauhöhe der Sensoranordnung zum Erfassen der Freigabestellung des Hubbolzens und der Drehstellung des Steuerglieds. Dadurch wird die Gesamtbauhöhe der Verriegelungsvorrichtung 1, d. h. die Gehäuseausdehnung in der axialen Richtung der Sperrbolzenanordnung, im wesentlichen durch die Länge der Sperrbolzenanordnung selbst bestimmt. Darüber hinaus hat die Sensoranordnung den Vorteil, daß die gesamte Auswerte- und Ansteuerelektronik in einer Schaltungsebene, nämlich der Ebene der Platine 29 untergebracht werden kann und keine elektrischen/elektronischen Bauelemente an anderen Stellen innerhalb des Gehäuses der Verriegelungsvorrichtung untergebracht zu werden brauchen (mit Ausnahme des Elektromotors 30).

Als Permanentmagneten eignen sich insbesondere Seltenerdmagneten, da diese bei relativ großer magnetischer Feldstärke eine geringe Baugröße aufweisen. Diese Permanentmagneten können in dem Hubbolzen 13 bzw. dem Schieber 22 eingeklebt oder eingepreßt sein. Bei Ausbildung des Schiebers 22 als Kunststoff-Spritzgußteil kann der zweite Permanentmagnet 26 auch von dem Kunststoff umspritzt sein.

Im Rahmen des Erfindungsgedankens sind zahlreiche alternative Ausführungsformen denkbar. Beispielsweise können weitere Permanentmagneten in die Stirnfläche des Hubbolzens, die Stirnfläche des Steuerglieds und/oder in Steuernocken oder Kurvenscheiben des Steuerglieds abtastende Schieber oder Hebel eingebracht sein, um die Zuverlässigkeit der Aussagen über die aktuelle Stellung der Sperrbolzenanordnung zu erhöhen oder weitere Aussagen zu gewinnen. An der Stirnseite des Hubbolzens kann auch ein sich in axialer und/oder radialer Richtung erstreckender Vorsprung angeformt sein, der den ersten Permanentmagneten aufnimmt.

### Bezugszeichenliste

- 1: Verriegelungsvorrichtung
- 2: Lenksäule
- 3: Lenkspindel
- 5: Mantelrohr
- 6: Aufnahme für Verriegelungseinrichtung
- 7: Sperrhülse
- 8: Sperrnut
- 9: Gehäuse
- 10: Gehäusedeckel
- 11: Sperrbolzenanordnung
- 12: Sperrbolzen
- 13: Hubbolzen
- 14: Führungskanal
- 15: Querstift
- 16: Stößel
- 17: Steuerglied
- 18: Außenverzahnung
- 19: Führungsnut
- 20: Ausnehmung (Bohrung)
- 21: Steuernocken
- 22: Schieber
- 23: Sackbohrung
- 24: erster Permanentmagnet
- 25: erster Hall-Sensor
- 26: zweiter Permanentmagnet
- 27: zweiter Hall-Sensor
- 28: anwendungsspezifische integrierte Schaltung
- 29: Schaltungsplatine
- 30: Elektromotor
- 31: Antriebswelle
- 32: Antriebsschnecke
- 33: Spiraldruckfeder
- 34: Langloch
- 35: Querstift
- 36: Gehäuseanschlag
- 37: Vorsprung
- 38: Langloch

## Patentansprüche

1. Verriegelungsvorrichtung (1) für eine Lenkspindel (3), mit:
einer Sperrbolzenanordnung (11),
einem Steuerglied (17), das über Führungseinrichtungen (15, 19) mit der Sperrbolzenanordnung (11) derart gekoppelt ist, daß die Sperrbolzenanordnung bei Drehung des Steuerglieds (17) zwischen einer Sperrstellung und einer Freigabestellung bewegbar ist, wobei die Sperrbolzenanordnung (11) in der Sperrstellung eine Drehung der Lenkspindel (3) blockiert, und
einer Sensoranordnung zum Erfassen der Freigabestellung der Sperrbolzenanordnung und zum Erfassen wenigstens einer Drehstellung des Steuerglieds (17),
**dadurch gekennzeichnet,**
**dass** die Sperrbolzenanordnung (11) durch eine Ausnehmung (20) des Steuerglieds (17) derart hindurchgeführt ist, dass das Steuerglied (17) um die Sperrbolzenanordnung (11) drehbar und die Sperrbolzenanordnung (11) in axialer Richtung bewegbar ist und die beiden Kopplungspositionen in einer zur axialen Richtung senkrechten Ebene liegen,
**daß** die Sensoranordnung umfaßt:
- einen ersten Permanentmagneten (24), der an der Sperrbolzenanordnung (11) befestigt ist und sich bei Erreichen der Freigabestellung in einer ersten Kopplungsposition relativ zu einem ersten Hall-Sensor (25) befindet, und
- einen zweiten Permanentmagneten (26), der mit dem Steuerglied (17) derart gekoppelt ist, daß er bei Erreichen einer der Freigabestellung entsprechenden Drehstellung des Steuerglieds (17) eine zweite Kopplungsposition relativ zu einem zweiten Hall-Sensor (27) einnimmt,
- wobei die Anordnung der Permanentmagnete (24, 26) so gewählt ist, daß die beiden Kopplungspositionen im wesentlichen in einer Ebene derart liegen, so daß die beiden Hall-Sensoren (25, 27) auf einer benachbart zu dieser Ebene angeordneten Schaltungsplatine (29) montiert werden können,
wobei der zweite Permanentmagnet (26) an einer von dem Steuerglied (17) bei dessen Drehung betätigbaren Übersetzungseinrichtung (22) oder
unmittelbar an dem Steuerglied (17) an einer von der Lenkspindel (3) abgewandten Oberfläche befestigt ist.

2. Verriegelungsvorrichtung nach Anspruch 1, **dadurch gekennzeichnet, daß** der erste Permanentmagnet (24) an dem der Lenkspindel (3) abgewandten Ende der Sperrbolzenanordnung (11) befestigt ist.

3. Verriegelungsvorrichtung nach Anspruch 1, **dadurch gekennzeichnet, daß** der zweite Permanentmagnet (26) bei Drehen des Steuerglieds (17) zumindest bei Annäherung an die vorgegebene Drehstellung in der zur axialen Richtung senkrechten Ebene bewegt wird und bei Erreichen der vorgegebenen Drehstellung eine vorgegebene Kopplungsposition in dieser Ebene einnimmt.

4. Verriegelungsvorrichtung nach Anspruch 3, **dadurch gekennzeichnet, daß** der zweite Permanentmagnet (26) derart angeordnet ist, daß seine Polachse in der zur axialen Richtung senkrechten Ebene liegt und der zweite Permanentmagnet bei der Bewegung des Steuerglieds (17) in die vorgegebene Drehstellung den zweiten Hall-Sensor (27) passiert.

5. Verriegelungsvorrichtung nach Anspruch 1, **dadurch gekennzeichnet, daß** das Steuerglied (17) einen Steuernocken (21) oder eine Kurvenscheibe aufweist und die Übersetzungseinrichtung als von dem Steuernocken (21) bzw. der Kurvenscheibe betätigter Hebel oder Schieber (22) ausgebildet ist.

6. Verriegelungsvorrichtung nach einem der Ansprüche 1 bis 5, **dadurch gekennzeichnet, daß** die Sperrbolzenanordnung (11) einen in einem Hubbolzen (13) gelagerten Sperrbolzen (12) umfaßt, wobei der Hubbolzen (13) in der Ausnehmung (20) des Steuerglieds (17) geführt ist, und daß der erste Permanentmagnet (24) stirnseitig in den Hubbolzen (13) eingesetzt ist.

7. Verriegelungsvorrichtung nach einem der Ansprüche 1 bis 6, **dadurch gekennzeichnet, daß** die Hall-Sensoren (25, 27) auf einer Schaltungsplatine (29) montiert sind.

8. Verriegelungsvorrichtung nach Anspruch 7, **dadurch gekennzeichnet, daß** die Hall-Sensoren (25, 27) Bestandteil integrierter Schaltungsbauelemente sind, die auf der Schaltungsplatine (29) montiert sind.

9. Verriegelungsvorrichtung nach Anspruch 8, **dadurch gekennzeichnet, daß** die Hall-Sensoren (25, 27) Bestandteil einer anwendungsspezifischen integrierten Schaltung (ASIC) (28) sind.

10. Verriegelungsvorrichtung nach Anspruch 8 oder 9, **dadurch gekennzeichnet, daß** die beiden Hall-Sensoren (25, 27) in ein gemeinsames Gehäuse einer integrierten Mehr-Chip-Schaltung aufgenommen sind.

11. Verriegelungsvorrichtung nach einem der Ansprüche 7 bis 10, **dadurch gekennzeichnet, daß** die Schaltungsplatine (29) senkrecht zu der axialen Richtung der Sperrbolzenanordnung (11) orientiert und derart benachbart zur Stirnseite der Sperrbolzenanordnung (11) angeordnet ist, daß der Abstand des ersten Permanentmagneten (24) von dem ersten Hall-Sensor (25) in der Freigabestellung minimal ist.

12. Verriegelungsvorrichtung nach einem der Ansprüche 1 bis 11, **dadurch gekennzeichnet, daß** wenigstens einer der Permanentmagnete (24, 26) ein Seltenerdmagnet ist.

## Claims

1. A locking device (1) for a steering shaft (3), including:
a locking pin assembly (11)
a control element (17), which is coupled via guide devices (15, 19) to the locking pin assembly (11) such that, when the control element (17) is rotated, the locking pin assembly is moveable between a locked position and a released position, wherein the locking pin assembly (11) prevents rotation of the steering shaft in the locked position, and
a sensor assembly for detecting the released position of the locking pin assembly and for detecting at least one rotational position of the control element (17),
**characterised in that** the locking pin assembly (11) passes through an opening (20) in the control element (17) such that the control element (17) is rotatable about the locking pin assembly (11) and the locking pin assembly (11) is moveable in the axial direction and the two coupled positions lie in a plane perpendicular to the axial direction,
that the sensor includes:
- a first permanent magnet (24), which is fastened to the locking pin assembly (11) and, on reaching the released position, is situated in a first coupled position relative to a first Hall sensor (25) and
- a second permanent magnet (26), which is coupled to the control element (17) such that, on reaching a rotational position of the control element (17) corresponding to the released position, it is in a second coupled position relative to a second Hall sensor (27),
wherein the arrangement of the permanent magnets (24, 26) is so selected that the two coupled positions lie substantially in a plane such that the two Hall sensors (25, 27) can be mounted on a circuit board (29) situated adjacent to this plane,
wherein the second permanent magnet (26) is connected to a transmission device (22), which is actuable by the control element (17), when it rotates, or directly to the control element (17) at a surface remote from the steering shaft (3).

2. A locking device as claimed in claim 1, **characterised in that** the first permanent magnet (24) is fastened to the end of the locking pin assembly (11) remote from the steering shaft (3).

3. A locking device as claimed in claim 1, **characterised in that**, on rotation of the control element (17), at least when approaching the predetermined rotational position in the plane perpendicular to the axial direction, the second permanent magnet (26) is moved and, when the predetermined rotational position is reached, adopts a predetermined coupled position in this plane.

4. A locking device as claimed in claim 3, **characterised in that** the second permanent magnet (26) is so arranged that its polar axis lies in the plane perpendicular to the axial direction and, when the control element (17) is moved into the predetermined rotational position, the second permanent magnet passes the second Hall sensor (27).

5. A locking device as claimed in claim 1, **characterised in that** the control element (17) includes a control cam (21) or a cam disk and the transmission device is constructed in the form of a lever or slider (22) actuated by the control cam (21) or the cam disk.

6. A locking device as claimed in one of claims 1 to 5, **characterised in that** the locking pin assembly (11) includes a locking pin (12) mounted in a lifting pin (13), wherein the lifting pin (13) is guided in the opening (20) in the control element (17), and that the end face of the first permanent magnet (24) is inserted into the lifting pin (13).

7. A locking device as claimed in one of claims 1 to 6, **characterised in that** the Hall sensors (25, 27) are mounted on a circuit board (29).

8. A locking device as claimed in claim 7, **characterised in that** the Hall sensors (25, 27) are part of integrated circuit components, which are mounted on the circuit board (29).

9. A locking device as claimed in claim 8, **characterised in that** the Hall sensors (25, 27) are part of an application specific integrated circuit (ASIC) (28).

10. A locking device as claimed in claim 8 or 9, **characterised in that** the two Hall sensors (25, 27) are accommodated in a common housing of an integrated multiple chip circuit.

11. A locking device as claimed in one of claims 7 to 10, **characterised in that** the circuit board (29) is orientated perpendicular to the axial direction of the locking pin assembly (11) and is arranged adjacent to the end face of the locking pin assembly (11) such that the spacing of the first permanent magnet (24) from the first Hall sensor (25) is minimal in the released position.

12. A locking device as claimed in one of claims 1 to 11, **characterised in that** at least one of the permanent magnets (24, 26) is a rare earth magnet.

## Revendications

1. Dispositif de verrouillage (1) pour une colonne de direction (3), comprenant :
- un aménagement de boulon de blocage (11),
- un organe de commande (17) qui est couplé, via des dispositifs de guidage (15, 19), à l'aménagement de boulon de blocage (11), de sorte que l'aménagement de boulon de blocage soit déplaçable lors de la rotation de l'organe de commande (17) entre une position de blocage et une position de libération, l'aménagement de boulon de blocage (11) en position de blocage bloquant une rotation de la colonne de direction (3), et
un aménagement de détection pour enregistrer la position de libération de l'aménagement de boulon de blocage et pour enregistrer au moins une position de rotation de l'organe de commande (17),
**caractérisé en ce que**
l'aménagement de boulon de blocage (11) est passé à travers un évidement (20) de l'organe de commande (17), de sorte que l'organe de commande (17) puisse tourner autour de l'aménagement de boulon de blocage (11) et que l'aménagement de boulon de blocage (11) puisse se déplacer dans une direction axiale et que les deux positions de couplage se situent dans un plan perpendiculaire à la direction axiale,
**en ce que** l'aménagement de détection comprend :
- un premier aimant permanent (24) qui est fixé sur l'aménagement de boulon de blocage (11) et qui se trouve, lorsque la position de libération est atteinte, dans une première position de couplage par rapport à un premier capteur de Hall (25), et
- un second aimant permanent (26) qui est couplé à l'organe de commande (17), de manière à adopter une seconde position de couplage par rapport à un second capteur de Hall (27) lorsqu'une position de rotation de l'organe de commande (17) correspondant à la position de libération est atteinte,
l'aménagement des aimants permanents (24, 26) étant choisi de sorte que les deux positions de couplage se situent sensiblement dans un plan de manière que les deux capteurs de Hall (25, 27) puissent être montés sur une platine de circuit (29) aménagée de manière adjacente à ce plan,
le second aimant permanent (26) étant fixé sur un dispositif de transformation de vitesse (22) actionnable par l'organe de commande (17) lors de sa rotation ou
directement sur l'organe de commande (17) sur une surface opposé à la colonne de direction (3).

2. Dispositif de verrouillage selon la revendication 1, **caractérisé en ce que** le premier aimant permanent (24) est fixé à l'extrémité opposée à la colonne de direction (3) de l'aménagement de boulon de blocage (11).

3. Dispositif de verrouillage selon la revendication 1, **caractérisé en ce que** le second aimant permanent (26) est déplacé lors de la rotation de l'organe de commande (17), au moins en s'approchant de la position de rotation prédéfinie, dans le plan perpendiculaire à la direction axiale et, lorsque la position de rotation prédéfinie est atteinte, adopte une position de couplage prédéfinie dans ce plan.

4. Dispositif de verrouillage selon la revendication 3, **caractérisé en ce que** le second aimant permanent (26) est aménagé de sorte que son axe polaire se situe dans le plan perpendiculaire à la direction axiale et **en ce que** le second aimant permanent passe le second capteur de Hall (27) lorsque l'organe de commande (17) se déplace en position de rotation prédéfinie.

5. Dispositif de verrouillage selon la revendication 1, **caractérisé en ce que** l'organe de commande (17) présente une came de commande (21) ou un disque à cames et **en ce que** le dispositif de transmission de vitesse se présente sous la forme d'un levier ou d'un poussoir (22) actionné par la came de commande (21) ou le disque à cames.

6. Dispositif de verrouillage selon l'une quelconque des revendications 1 à 5, **caractérisé en ce que** l'aménagement de boulon de blocage (11) comprend un boulon de blocage (12) monté dans un boulon de levage (13), le boulon de levage (13) étant guidé dans l'évidement (20) de l'organe de commande (17), et **en ce que** le premier aimant permanent (24) est inséré côté frontal dans le boulon de levage (13).

7. Dispositif de verrouillage selon l'une quelconque des revendications 1 à 6, **caractérisé en ce que** les capteurs de Hall (25, 27) sont montés sur une platine de circuit (29).

8. Dispositif de verrouillage selon la revendication 7, **caractérisé en ce que** les capteurs de Hall (25, 27) font partie de composants de circuit intégré qui sont montés sur la platine de circuit (29).

9. Dispositif de verrouillage selon la revendication 8, **caractérisé en ce que** les capteurs de Hall (25, 27) font partie d'un circuit intégré spécialisé (ASIC) (28).

10. Dispositif de verrouillage selon la revendication 8 ou 9, **caractérisé en ce que** les deux capteurs de Hall (25, 27) sont logés dans un boîtier commun d'un circuit intégré à plusieurs puces.

11. Dispositif de verrouillage selon l'une quelconque des revendications 7 à 10, **caractérisé en ce que** la platine de circuit (29) est orientée perpendiculairement à la direction axiale de l'aménagement de boulon de blocage (11) et est aménagée de manière adjacente au côté frontal de l'aménagement de boulon de blocage (11), de sorte que la distance entre le premier aimant permanent (24) et le premier capteur de Hall (25) en position de libération soit minimale.

12. Dispositif de verrouillage selon l'une quelconque des revendications 1 à 11, **caractérisé en ce qu'**au moins l'un des aimants permanents (24, 26) est un aimant en terres rares.
